Europäisches Patentamt

European Patent Office

Office européen des brevets

(11) Publication number: **0 474 900 A1**

# EUROPEAN PATENT APPLICATION

(21) Application number: **90117493.8**

(22) Date of filing: **11.09.90**

(51) Int. Cl.⁵: **A47J 37/08**, A47J 37/06

(43) Date of publication of application:
**18.03.92 Bulletin 92/12**

(84) Designated Contracting States:
**AT BE CH DE ES FR GB GR IT LI LU NL SE**

(71) Applicant: **Hsieh, Tung-Chiang**
**6, Lane 210, Chung Cheng S. Rd., Yung Kang Hsiang**
**Tainan, Hsien(TW)**

(72) Inventor: **Hsieh, Tung-Chiang**
**6, Lane 210, Chung Cheng S. Rd., Yung Kang Hsiang**
**Tainan, Hsien(TW)**

(74) Representative: **Kador & Partner**
**Corneliusstrasse 15**
**W-8000 München 5(DE)**

(54) **A multi-purpose toaster.**

(57) A multi-purpose toaster (1), wherein the heating cords (51,52) and the toasting room are horizontally disposed. ON top of the toaster (11) are drilled several griddle putting holes (16) to accept the griddle (18). This makes it possible to toast bread, fry eggs or warm up milk at the same time to save energy and time.

FIG.1

## BACKGROUND OF THE INVENTION

Owing to high inflation, most people need to work harder than before in order to catch up the step of progress. This makes their life tight and does not have enough time for them to spend on meals. For this reason, fast food is needed by almost of people, such as breakfast, one or two pieces of toast, one glass of milk, a sunny side egg or a bacon and a cup of coffee are to feed oneself.

However, in prepare the above breakfast, one needs to have one toaster and at least one griddle to prepare bacon and fry egg in sequence which not only waste their time but also electric energy.

The inventor, in view of this, has invented this invention which can have both toast, bacon and egg ready at the same time and not waste energy.

## SUMMARY OF THE INVENTION

It is the primary object of the present invention to provide a multi-purpose toaster which can save energy.

It is another object of the present invention to provide a multi-purpose toaster which can save a lot of time that comply with a proverb "time is money".

It is still another object of the present invention to provide a mulit-purpose toaster which is easy to operate.

It is a further object of the present invention to provide a multi-purpose toaster which is inexpensive to produce.

## BRIEF DESCRIPTION OF THE DRAWINGS

FIG. 1 is a perspective view of the present invention;

FIG. 2 is also a perspective view of the present invention;

FIG. 3 is a cross-sectional view from 'A' to 'A' of the FIG. 2; and

FIG. 4 is another cross-sectional view from 'B' to 'B' of the FIG. 2.

## DETAILED DESCRIPTION OF THE PREFERRED EMBODIMENT

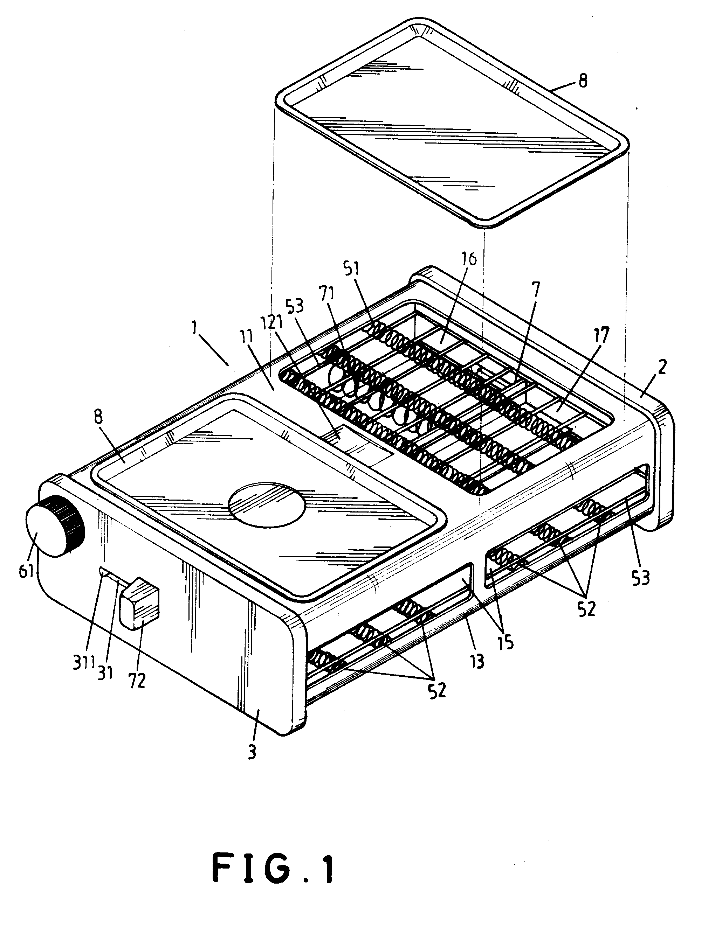

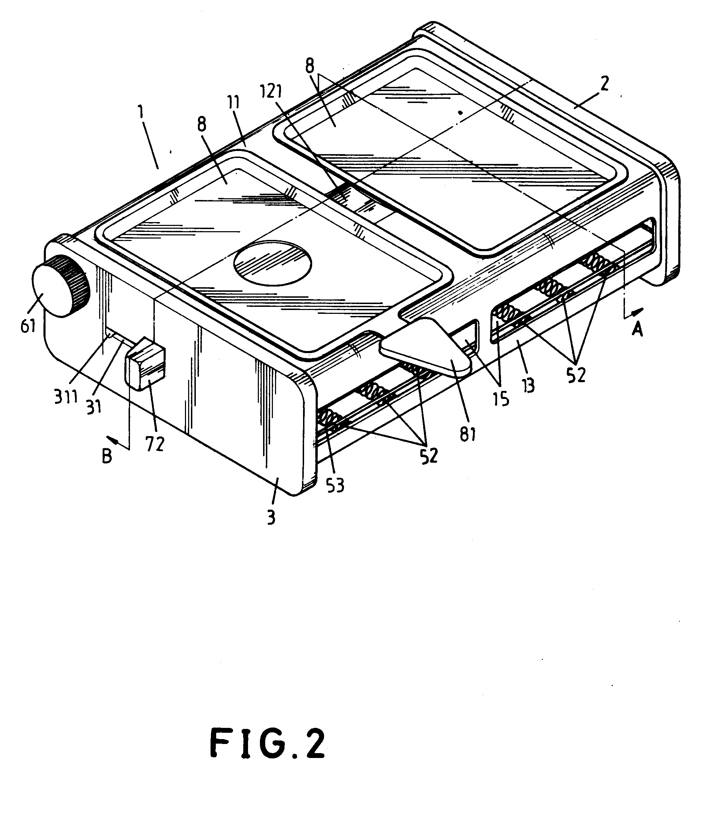

With reference to the drawings FIGs. 1, 2, 3 and 4, the present invention comprises an outer housing 1, a right side board 2 and a left side board 3. The outer housing 1 could be a piece of metal bent three times and forms to four surfaces, they are the front surface 13, the back surface 12 and the top surface 11 and bottom surface 14. The top surface 11 of the outer housing 1 has two griddle putting holes 16 to accept two griddles 8 and a recess 121 inbetween the two putting holes 16 for the convenience of place or pick up the two griddles 8. To avoid a burn, the griddles 8 could be connected with a handle 81 (only shown in FIG. 2). Two lines of heating cords 51 and 52 are deposited inside the outer housing 1 in horizontal direction, the upper heating cord 51 is underneath the top surface 11 and the lower heating cord 52 is at the bottom just above the bottom surface 14. The toasting room 17 is set between upper and lower heating cords 51 and 52 also in a horizontal directions, and utilize two grids 53 at both its top and bottom sides to divided with heating cords 51 and 52. Two openings 15 at the front surface 13 for placing bread into the toasting room 17 . For convenience use, people can place a L-shaped tray 7 on the bottom grid 51 and link with two linking rods 73 which stretch out of the grooves 31 of the right board 2 and the left board 3 and each connected with a knob 72 for easy to push out or pull in the tray 7. The back side of the tray 7 is hooked with two springs 71 which create a restoring force to pull the tray 7 to return to its position when the tray 7 is pull out. An adjustable thermostatic 6 is located inside the outer housing 1 and controled by a controller 61 at the left board 3 to change the temperature.

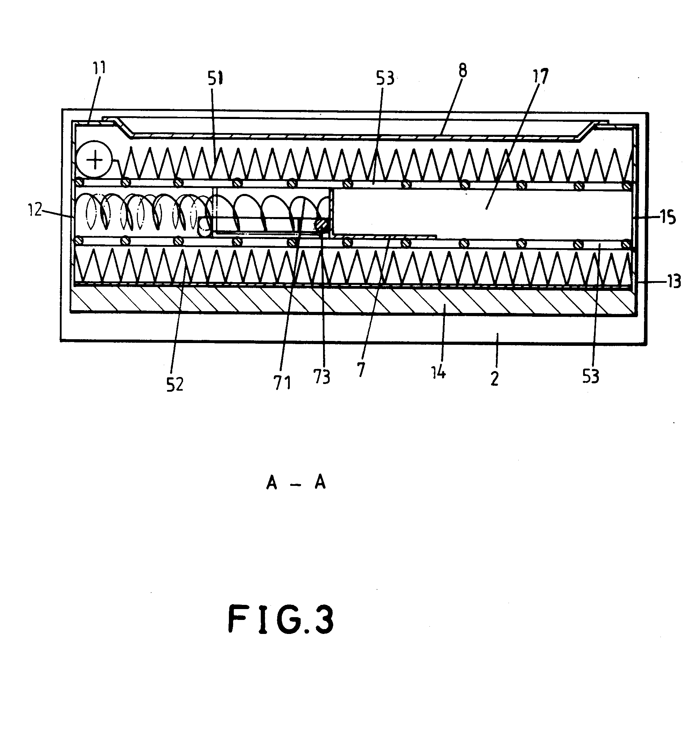

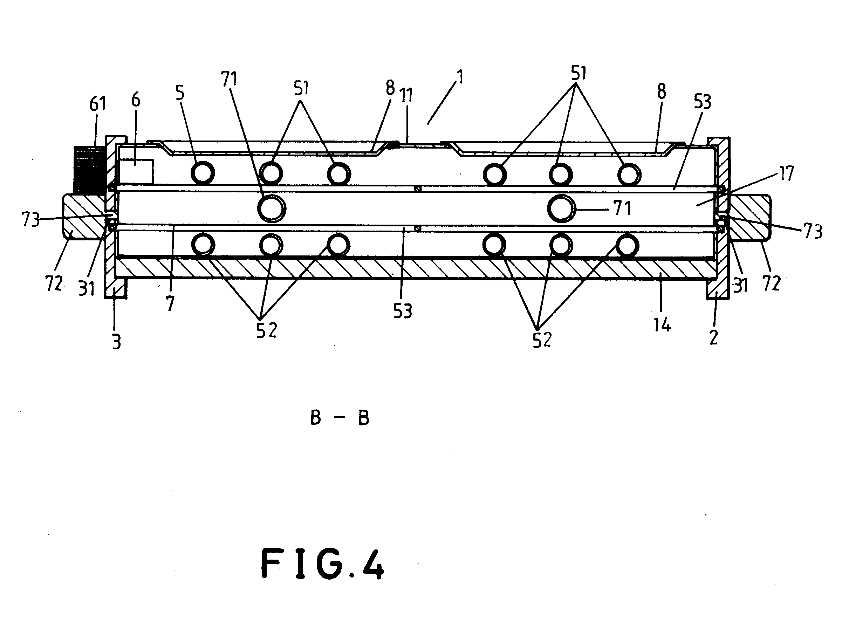

When operating (shown as in FIGs. 1 and 2 and please refer to FIGs. 3 and 4), firstly, pull the knob 72 outward to bring the tray 7 out and place breads on the tray 7 then push the knob 72 inward which leads the tray 7 to move into the toaster and caught in the recess 311. Secondly, turn on power, which is well known by the person who has this knowledge and will not be described at here, to bake the bread. In the meantime, the upper heating cord 51 will heat the two griddles 8 which when getting hot can be used either to fry egg, baking sausage... etc.

According foregoing, it is understood that the best merit of this invention is the two lines of heating cords 51 and 52 are placed horizontally and bread is placed between the two lines of heating cords 51 and 52 and two griddles 8 are placed on top of upper heating cord 51 that can save a lot of electric energy and time.

It is to be noticed that the forms of the invention herewith shown and described are to be taken as preferred examples of the same, and that various shape, drawings of the parts and arrangement may be resorted to, without departing from the spirit of the invention or scope of the claim.

## Claims

1. A multi-purpose toaster comprising:

A outer housing has two lines of heating cords therein, said heating cords are deposited in horizontal direction, wherein the upper heating cord is arranged underneath the top surface of said housing,and the lower heating cord is above the bottom surface of said housing;

A toasting room is put horizontally between sais upper and lower heating cords of the said housing and has two grids at the top and bottom side to divided with heating cords;

Several griddle putting holes which is on the top surface of said housing, and parallel to the said toasting room and heating cords; and

Several griddles may put it in the said putting holes.

# FIG.1

FIG.2

A — A

# FIG.3

B – B

FIG.4

EP 0 474 900 A1

European
Patent Office

EUROPEAN SEARCH
REPORT

Application Number

EP 90 11 7493

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-6 914 977 (CLAUDIUS)<br>* the whole document *<br>— — — | 1 | A 47 J 37/08<br>A 47 J 37/06 |
| X | DE-U-9 001 290 (HAUBL)<br>* page 2, line 12 - page 4, line 11; figure 1 *<br>— — — | 1 | |
| X | US-A-1 946 886 (SCHRAMM)<br>* page 2, line 7 - line 30; figures 1-3 *<br>— — — | 1 | |
| A | US-A-1 416 992 (STEHMAN)<br>* page 1, line 47 - page 2, line 7; figures *<br>— — — | 1 | |
| A | GB-A-956 791 (MATSUSHITA ELECTRIC INDUSTRIAL CO LTD)<br>* page 3, line 92 - line 97; figures 1,2 *<br>— — — — — | 1 | |

TECHNICAL FIELDS
SEARCHED (Int. Cl.5)

A 47 J

The present search report has been drawn up for all claims

| Place of search | Date of completion of search | Examiner |
|---|---|---|
| The Hague | 15 May 91 | BODART P.A. |